# EUROPEAN PATENT APPLICATION

(11) **EP 3 115 646 A1**
(43) Date of publication of application: **11.01.2017**
(21) Application number: 15754803.3
(22) Date of filing: 18.02.2015
(51) Int. Cl.: F16H 55/36, F16B 41/00

(54) **POWER TRANSMISSION DEVICE**

(30) Priority: 25.02.2014 JP 2014033912
(71) Applicant: Ogura Clutch Co., Ltd., Kiryu-shi, Gunma 376-0011 (JP)
(72) Inventor: HARA,Yukihiro, Kiryu-shi Gunma 376-0011 (JP); KANZAWA,Takahiro, Kiryu-shi Gunma 376-0011 (JP)
(74) Representative: Zenz Patentanwälte Partnerschaft mbB
(86) International application number: PCT/JP2015/054395
(87) International publication number: WO 2015/129518

(57) **Abstract**

A power transmission device according to this invention includes a rotatably supported pulley (6), an elastic member (21) overlapped on the pulley from one side in the axial direction of a rotating shaft, a fixing screw (11) extending through the pulley and the elastic member in the axial direction, a nut (24) sandwiching the pulley and the elastic member in cooperation with the fixing screw, an annular nut holder (25) for holding the nut, and a latching structure (27) for attaching the nut holder to the pulley. The latching structure includes a plurality of hook through holes (14) extending through the pulley in the axial direction, and a plurality of hooks (13) projecting from portions of the nut holder, the portions corresponding to the hook through holes. The hook through holes and the hooks are spaced apart from each other along the rotational direction of the pulley. The hook has a latching piece (36) which comes in contact with the pulley from a side opposite from the nut holder, when the position of the nut holder in the rotational direction with respect to the pulley is changed while the hook is inserted into the hook through hole.

## Description

### Technical Field

The present invention relates to a power transmission device including a nut holder for holding a nut in an attaching portion of a rotary member and power transmission member.

### Background Art

Conventionally, a power transmission device for use in a car air-conditioner compressor or the like includes a pulley to which the power of an engine is transmitted, a hub connected to the rotating shaft of the compressor, and a power transmission mechanism for coupling the pulley and hub. The power transmission mechanism is assembled to the hub, and formed as one assembly. This power transmission mechanism is fastened to the pulley by a fixing screw and nut after the pulley is fixed to the housing or the like of the compressor.

This fastening work is often performed in a place different from the place of the power transmission mechanism assembling work. To facilitate the fastening work, therefore, the nut is preassembled to and held by the pulley. This work of holding the nut by the pulley is desirably as easy as possible in order to increase the productivity and reduce the manufacturing cost.

To easily hold the nut by the pulley as described above, it is possible to use a locking pawl type nut holder as described in, e.g., patent literature 1.

This locking pawl type nut holder disclosed in patent literature 1 includes an annular nut holder main body having a plurality of recesses in which the nut is fitted, and a plurality of locking pieces which extend toward the pulley from the nut holder main body in the axial direction. The plurality of recesses open toward the pulley.

The locking piece is so formed as to be elastically deformable in a direction different from the extending direction, i.e., in a direction different from the axial direction. A locking pawl is formed on the distal end portion of the locking piece. When the locking piece is inserted into a through hole of the pulley, this locking pawl elastically deforms the locking piece in the direction different from the axial direction. In a state in which the locking pawl projects outside the through hole, the locking pawl is hooked on the opening edge of the through hole by the elastic restoring force of the locking piece (the locking pawl is locked).

This conventional nut holder is overlaid on the pulley with the nut being fitted in the recess, and fixed to the pulley together with the nut when the locking piece is pushed into the through hole of the pulley and the locking pawl is locked.

### Related Art Literature

### Patent Literature

Patent Literature 1: Japanese Patent Laid-Open No. 2011-247406

### Disclosure of Invention

### Problem to be Solved by the Invention

The locking pawl type nut holder disclosed in patent literature 1 has the problem that the nut holder may come off the pulley when the fixing screw is screwed into the nut. This is so because the work of screwing the fixing screw into the nut is performed while pressing the fixing screw against the nut.

This pressing force formed by the pressing load acts as a force of pressing the locking pawl of the nut holder in the axial direction (in a direction in which the nut holder is moved away from the pulley). When the pressing force like this is applied, the locking pawl deforms and comes off the opening edge of the through hole. When the locking pawl thus comes off the opening edge, the locked state is canceled, and the nut holder comes off the pulley as described above.

The present invention has been made to solve the problem as described above, and has as its object to provide a power transmission device which adopts an arrangement capable of easily attaching a nut holder, and at the same time prevents the nut holder from coming off by a pressing force which presses a fixing screw against a nut.

### Means of Solution to the Problem

To achieve this object, a power transmission device according to the present invention includes a rotatably supported rotary member, a power transmission member overlapped on the rotary member from one side in an axial direction of a rotating shaft, a fixing screw extending through the rotary member and the power transmission member in the axial direction, a nut configured to sandwich the rotary member and the power transmission member in cooperation with the fixing screw, an annular nut holder configured to hold the nut, and a latching structure configured to attach the nut holder to a nut-side member among the rotary member and the power transmission member, which is closer to the nut, wherein the latching structure includes a plurality of through holes formed in one member among the nut-side member and the nut holder, and extending through the one member in the axial direction, and a plurality of hooks projecting from portions of the other member among the nut-side member and the nut holder, the portions corresponding to the through holes, the through holes and the hooks are spaced apart from each other along a rotational direction of the rotary member, and the hook has a latching piece which comes in contact with the one member from a side opposite from the other member, when a position of the other member in the rotational direction with respect to the one member is changed while the hook is inserted into the through hole.

### Effect of the Invention

In the present invention, when the hook moves together with the other member with respect to the one member and the latching piece of the hook comes in contact with the one member, the hook is latched by the one member. When the hook is thus latched, the nut holder and nut are fixed to the nut-side member. That is, this nut holder can easily be fixed to the nut-side member without using any tool.

When the fixing screw is screwed into the nut of the nut holder in order to couple the rotary member and power transmission member, a pressing force formed by a pressing load is applied to the nut. This pressing force acts as a force of pressing the hook in the axial direction. Unlike the locking piece disclosed in patent literature 1 and formed to be elastically deformable in a direction different from the axial direction, the hook need not largely elastically deform, and can be formed to have a high rigidity.

In the present invention, therefore, it is possible to prevent the hook from being deformed by the above-described pressing force, so the nut holder can strongly be fixed to the nut-side member.

Accordingly, the present invention can provide a power transmission device which adopts an arrangement capable of easily attaching the nut holder, and in which the nut holder does not come off due to the pressing force which presses the fixing screw against the nut.

### Brief Description of Drawings

Fig. 1 is a sectional view of a power transmission device according to the first embodiment;
Fig. 2 is a front view of a pulley assembly according to the first embodiment, in which a line I - I indicates the breaking position in Fig. 1;
Fig. 3 is a front view of a nut holder according to the first embodiment;
Fig. 4 is a sectional view taken along a line IV - IV in Fig. 2;
Fig. 5 is a perspective view showing the main parts of the nut holder according to the first embodiment in an enlarged scale;
Fig. 6A is a sectional view showing a state in which a hook is inserted into a through hole when attaching the nut holder according to the first embodiment;
Fig. 6B is a sectional view showing a state in which a latching piece abuts against the opening edge of the through hole when attaching the nut holder according to the first embodiment;
Fig. 6C is a sectional view showing a state in which the latching piece elastically deforms when attaching the nut holder according to the first embodiment;
Fig. 7 is a sectional view of a power transmission device according to the second embodiment;
Fig. 8 is a front view of a pulley assembly according to the second embodiment, in which a line VII - VII indicates the breaking position in Fig. 7;
Fig. 9 is a front view of a nut holder according to the second embodiment;
Fig. 10 is a sectional view taken along a line X - X in Fig. 7;
Fig. 11A is a sectional view showing a state in which a hook is inserted into a through hole when attaching the nut holder according to the second embodiment;
Fig. 11B is a sectional view showing a state in which a latching piece abuts against the opening edge of the through hole when attaching the nut holder according to the second embodiment;
Fig. 11C is a sectional view showing a state in which the opening edge of the through hole elastically deforms when attaching the nut holder according to the second embodiment;
Fig. 12 is a sectional view of a latching structure according to the third embodiment; and
Fig. 13 is a sectional view of the latching structure according to the third embodiment.

### Best Mode for Carrying Out the Invention

### (First Embodiment)

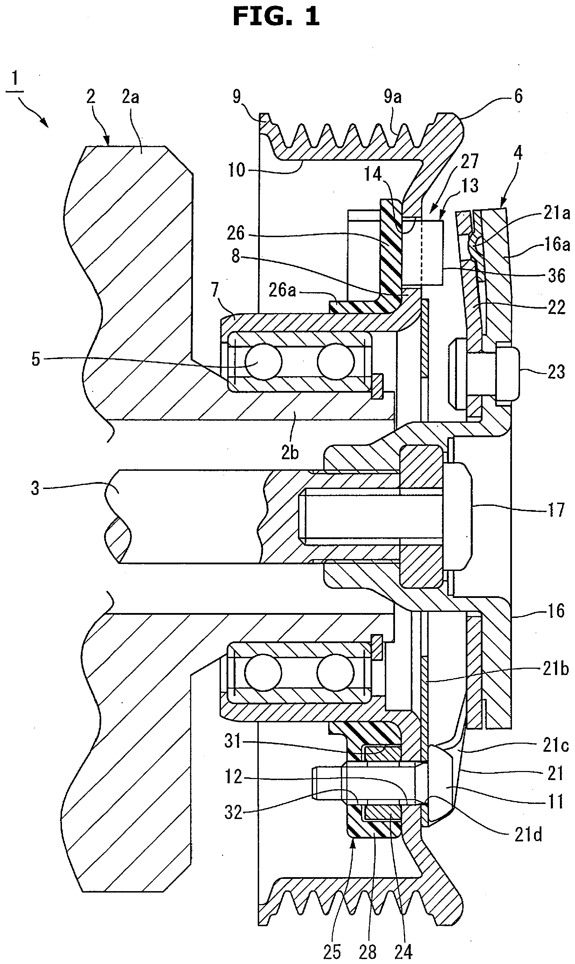

An embodiment of a power transmission device according to the present invention will be explained in detail below with reference to Figs. 1 to 6.

A power transmission device 1 shown in Fig. 1 transmits the power of an automobile engine (not shown) to a rotating shaft 3 of a car air conditioner 2. Also, the power transmission device 1 includes a torque limiter mechanism 4 for interrupting power transmission when an overload is produced on the rotating shaft 3. In this embodiment, the distal-end side (the right side in Fig. 1) of the rotating shaft 3 will be called the front side of the compressor 2, and the opposite side will be called the rear side.

The compressor 2 includes a housing 2a which rotatably supports the rotating shaft 3. A cylindrical portion 2b positioned on the same axis as that of the rotating shaft 3 is formed in the front end portion of the housing 2a. A pulley 6 is rotatably supported by the cylindrical portion 2b via a bearing 5. The pulley 6 is made of a so-called sheet metal which is obtained by performing plastic working on a steel plate and molding the plate into a predetermined shape. In this embodiment, the pulley 6 forms "a rotary member" of the present invention.

The pulley 6 includes a boss 7 which fits on the bearing 5, a disk 8 extending outward in the radial direction from the front end portion of the boss 7, and a rim 9 extending from the outer circumferential portion of the disk 8 to the rear side of the compressor 2. That is, an annular groove 10 which opens toward the rear side of the compressor 2 is formed in the pulley 6 according to this embodiment. The housing 2a of the compressor 2 is formed to have a shape which covers the opening of the annular groove 10 from the rear side.

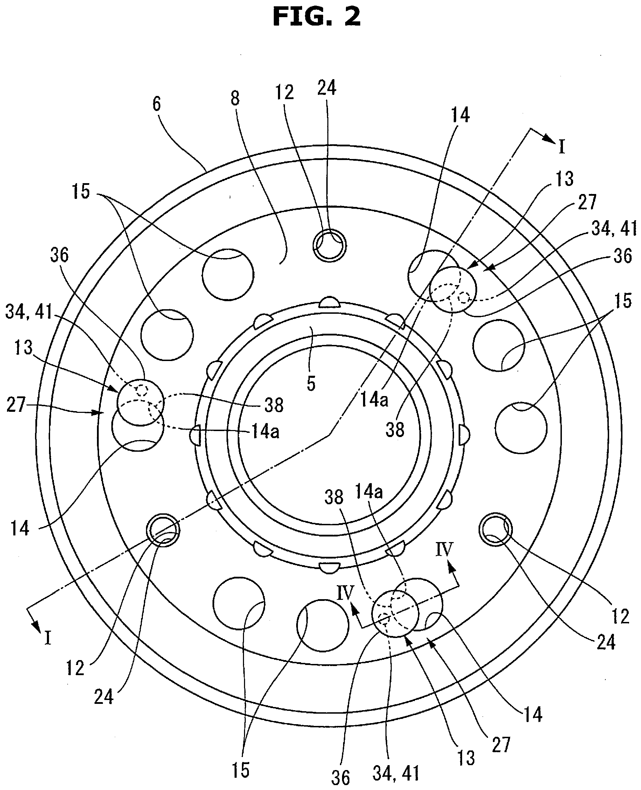

As shown in Fig. 2, three types of through holes are formed in the disk 8 of the pulley 6. The first through hole is a screw through hole 12 into which a fixing screw 11 (to be described later) is inserted. The second through hole is a hook through hole 14 into which a hook 13 (to be described later) is inserted.
The screw through hole 12 and hook through hole 14 are formed in each of positions which divide the pulley 6 into three equal parts in the circumferential direction. The third through hole is a noise reduction through hole 15 for reducing wind noise which is generated when the pulley 6 rotates. In the disk 8 according to this embodiment, a pair of noise reduction through holes 15 arranged close to each other in the rotational direction of the pulley 6 are formed in each of positions which divide the pulley 6 into three equal parts in the circumferential direction.

As shown in Fig. 1, a so-called poly-V-grooves 9a around which a transmission belt (not shown) is wound are formed in the rim 9 of the pulley 6.

A hub 16 is attached by spline fitting to the front end portion of the rotating shaft 3. The hub 16 is fixed to the rotating shaft 3 by a fixing bolt 17, and coupled with the pulley 6 via the torque limiter mechanism 4.

As shown in Fig. 1, the torque limiter mechanism 4 includes two members, i.e., an elastic member 21 and a holding plate 22. The elastic member 21 is formed into an annular plate and connected to the disk 8 of the pulley 6 by being fastened by the fixing screws 11. Also, a portion 21a to be sandwiched is formed on the outer circumferential side of the elastic member 21. The holding plate 22 holds the portion 21a to be sandwiched by sandwiching it in cooperation with the hub 16.

The elastic member 21 forms "a power transmission member" of the present invention. The elastic member 21 according to this embodiment includes a base portion 21b formed into an annular shape surrounding the rotating shaft when viewed in the axial direction of the rotating shaft, three coupling pieces 21c formed to project from the outer circumferential portion of the annular base portion 21b, and the portion 21a to be sandwiched formed in the distal end portion of each of the coupling pieces 21c.

The coupling pieces 21c extend outside in the radial direction of the annular base portion 21b and also extend in the circumferential direction. Also, the coupling pieces 21c are arranged on the outer circumferential portion of the base portion 21b at equal intervals in the circumferential direction. Connecting portions between the coupling pieces 21c and annular base portion 21b are fastened to the disk 8 by a fastening structure having the fixing screws 11. Through holes 21d into which the fixing screws 11 are inserted are formed in the above-described connecting portions of the elastic member 21.

The portion 21a to be sandwiched is held by being sandwiched between a flange 16a of the hub 16 and the outer circumferential portion of the holding plate 22. The holding plate 22 is fixed to the hub 16 by a rivet 23 so as to hold the portion 21a to be sandwiched by sandwiching it between the holding plate 22 and flange 16a.

A fastening portion for connecting the elastic member 21 to the disk 8 of the pulley 6 by fastening the elastic member 21 includes the fixing screws 11, nuts 24 for the fixing screws 11, and a nut holder 25 for holding the nuts 24.

The fixing screw 11 extends through the disk 8 and elastic member 21 in the axial direction from the front side (the right side in Fig. 1) of the compressor 2. The fixing screw 11 is used for each of the three coupling pieces 21c of the elastic member 21. That is, the elastic member 21 is fixed to the disk 8 by the three fixing screws 11.

The nut 24 is a general hexagon nut in this embodiment, and sandwiches the disk 8 and elastic member 21 in cooperation with the fixing screw 11.

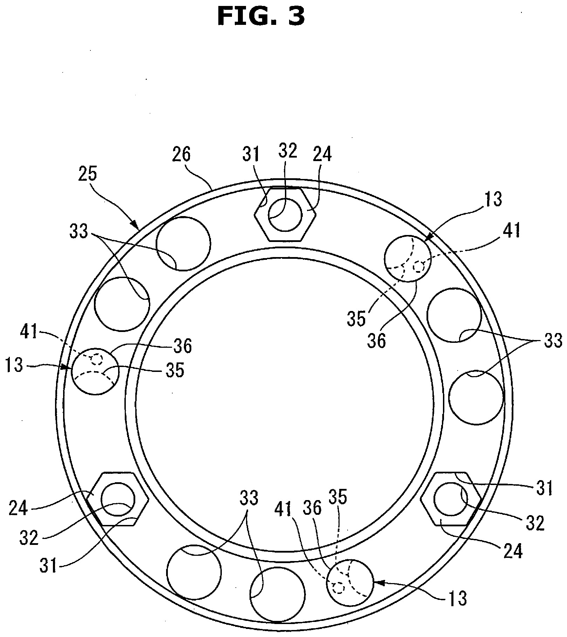

As shown in Fig. 3, the nut holder 25 for holding the nut 24 includes an annular nut holder main body 26, and is attached to the disk 8 of the pulley 6 via a latching structure 27 (to be described later). In this embodiment, the pulley 6 is equivalent to "a nut-side member close to a nut" of the present invention. The nut holder 25 according to this embodiment is molded into a predetermined shape by using a synthetic resin as a material.

The nut holder main body 26 is formed into a plate parallel to the disk 8 of the pulley 6, and overlapped on the rear-side end face of the disk 8, as shown in Fig. 1. A cylindrical rib 26a (see Fig. 1) is formed on the inner circumferential portion of the nut holder main body 26 according to this embodiment so as to project to the rear side. The rib 26a is fitted on the boss 7 of the pulley 6.

As shown in Fig. 1, columnar portions 28 are formed in those portions of the nut holder main body 26, which face the screw through holes 12 of the disk 8.
The columnar portions 28 are each formed into a shape extending and projecting from the nut holder main body 26 to the side (the rear side of the compressor 2) opposite to the disk 8. The columnar portions 28 are integrated with the nut holder main body 26 by molding. The height of the columnar portions 28 (the thickness of the nut holder 25 in the axial direction) is made larger than the length of the nut 24 in the axial direction.

The columnar portion 28 holds the nut 24. The columnar portion 28 includes a recessed portion 31 formed into a shape in which the nut 24 fits, and a screw insertion through hole 32 extending through the bottom of the recessed portion 31.

The recessed portion 31 opens in that end face of the nut holder main body 26, which faces the disk 8.

As shown in Fig. 3, the opening shape of the recessed portion 31 is formed into a hexagonal shape in which the six corners of the nut 24 fit. Also, as shown in Fig. 1, the recessed portion 31 is formed to have a depth capable of accommodating the nut 24. Between the three recessed portions 31 of the nut holder main body 26, the above-described hooks 13 are formed, and noise reduction through holes 33 are formed. This noise is wind noise generated when the nut holder 25 rotates together with the pulley 6.

The hook 13 forms a part of the latching structure 27, and is formed in each of positions which divide the nut holder 25 in three equal parts in the circumferential direction.

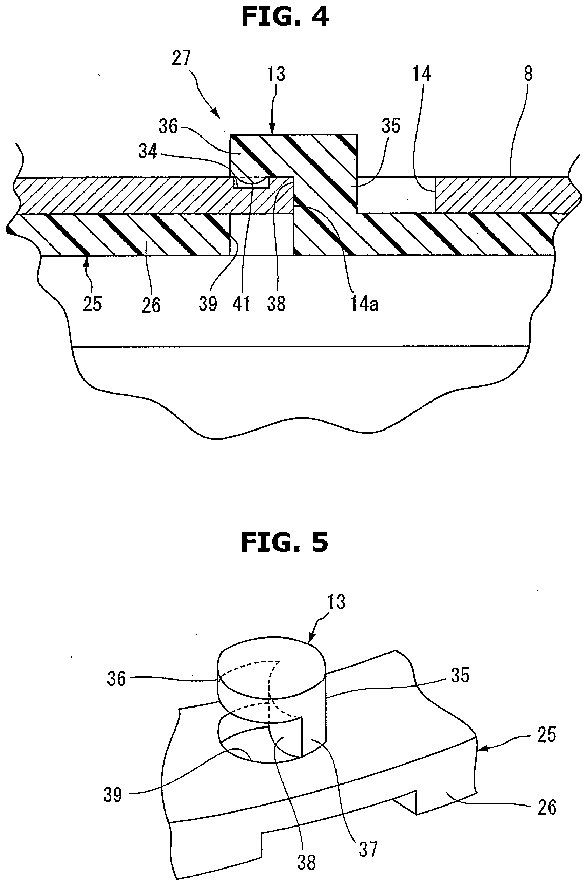

As shown in Figs. 2 and 4, the latching structure 27 according to this embodiment includes the hook through hole 14 formed in the disk 8 of the pulley 6, and the hook 13 inserted into the hook through hole 14. In this embodiment, the pulley 6 is equivalent to "one member" of the present invention, and the nut holder 25 is equivalent to "the other member" of the present invention.

The hook through hole 14 is formed into a shape which extends through the disk 8 in the axial direction of the rotating shaft. The opening shape of the hook through hole 14 is a circle.

As shown in Fig. 4, a recess 34 (to be described later) is formed near the hook through hole 14 in the front surface of the disk 8 of the pulley 6. As shown in Fig. 2, the recess 34 is formed in a position adjacent to the hook through hole 14 on one side in the rotational direction of the pulley 6.

As shown in Fig. 1, the hook 13 described above is formed in a portion of the nut holder main body 26, which faces the hook through hole 14 in the disk 8. The hook 13 is formed into a shape which can be inserted into the hook through hole 14. The hook 13 and hook through hole 14 are spaced apart from each other in the rotational direction of the pulley 6. In this embodiment, the hook 13 and hook through hole 14 are formed in each of positions which divide the pulley 6 into three equal parts in the circumferential direction.

The hooks 13 project toward the disk 8 from the nut holder 25 in the axial direction of the pulley 6.

As shown in Fig. 4, the hook 13 according to this embodiment is formed to have an inverted L-shaped section shown in Fig. 4 by a post 35 projecting from the nut holder main body 26 in the axial direction (the vertical direction in Fig. 4) of the pulley 6, and a latching piece 36 extending from the distal end of the post 35 to one side in the rotational direction of the pulley 6.

As shown in Fig. 5, the post 35 is formed into a columnar shape having two convex surfaces. The two circumferential surfaces are a first convex surface 37 forming a part of the column, and a second convex surface 38 connecting the two ends of the first convex surface 37 in the circumferential direction. The first and second convex surfaces 37 and 38 are each formed to have an arc-shaped section. In addition, each of the first and second convex surfaces 37 and 38 is formed into a shape which coincides with a hole wall surface 14a of the hook through hole 14, which is positioned on one side in the rotational direction of the pulley 6.

The latching piece 36 is formed into a shape which can be inserted into the hook through hole 14, and, as shown in Fig. 3, projects from the post 35 to one side in the rotational direction of the pulley 6 when viewed in the axial direction of the pulley 6. The latching piece 36 according to this embodiment is formed into a disk-like shape capable of fitting in the hook through hole 14 when viewed in the axial direction. The outer circumferential surface of the latching piece 36 is connected to the first convex surface 37 of the post 35 so as not to form any step. That is, the latching piece 36 according to this embodiment is formed into a shape obtained by removing a part of an imaginary column which can fit in the hook through hole 14. A hole 39 (see Fig. 5) is formed in a portion of the nut holder main body 26, which faces the latching piece 36. The hole 39 is formed into a shape extending through the nut holder main body 26.

As shown in Fig. 4, a projection 41 is formed in a portion of the latching piece 36, which points to the hole 39. The projection 41 projects toward the disk 8 of the pulley 6. The projection 41 according to this embodiment is formed into a shape which is a part of a sphere. The recess 34 formed in the disk 8 of the pulley 6 is positioned in a portion facing the projection 41 when the hook 13 is positioned in a latched position shown in Fig. 4. In this state shown in Fig. 4, the projection 41 is accommodated in the recess 34.

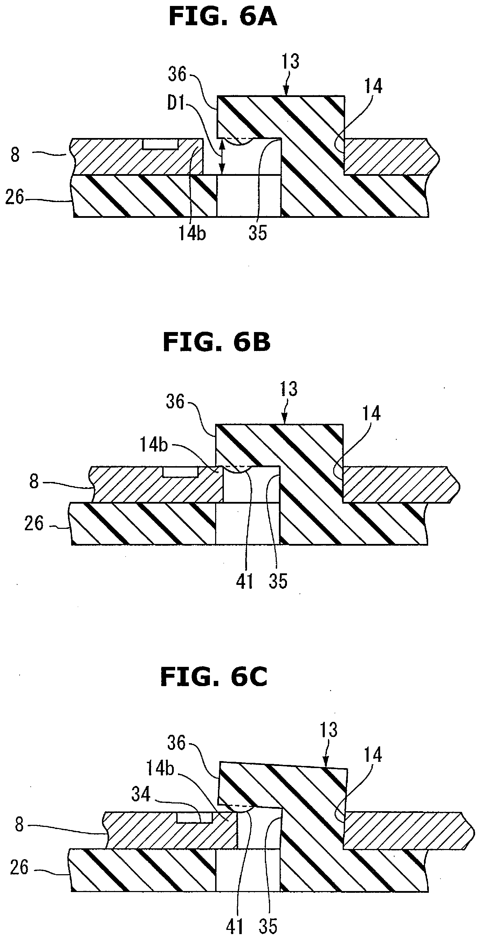

A gap D1 (see Fig. 6A) between the latching piece 36 and nut holder main body 26 is formed to have a dimension which is smaller than the thickness of the disk 8 of the pulley 6, and by which the disk 8 of the pulley 6 can be press-fitted between the latching piece 36 and nut holder main body 26 as shown in Fig. 4. The procedure of this press fit will be explained below with reference to Figs. 6A to 6C.

To perform this press fit, as shown in Fig. 6A, the hook 13 is first inserted into the hook through hole 14, and the nut holder main body 26 is overlapped on the rear surface of the disk 8 of the pulley 6.
Then, the position of the nut holder 25 in the rotational direction with respect to the pulley 6 is changed. This rotating work is performed by, e.g., rotating the nut holder 25 in one direction with respect to the pulley 6 around the axis of the pulley 6. This rotational direction is a direction in which the latching piece 36 projects from the post 35.

When the nut holder 25 is thus rotated with respect to the pulley 6, as shown in Fig. 6B, the projection 41 of the latching piece 36 is pressed against an opening edge 14b of the hook through hole 14. When the nut holder 25 is further rotated in this state, as shown in Fig. 6C, the projection 41 climbs over the opening edge 14b, and the latching piece 36 slightly warps clockwise in Fig. 6C by elastic deformation. When the nut holder 25 is further rotated with the latching piece 36 being elastically deformed as described above, as shown in Fig. 4, the opening edge 14b of the hook through hole 14 abuts against the second convex surface 38 of the post 35. As shown in Fig. 2, the second convex surface 38 matches the hole wall surface 14a of the hook through hole 14. Also, the projection 41 of the latching piece 36 is accommodated in the recess 34 of the disk 8. The above-described press-fitting work is complete when the projection 41 is thus accommodated in the recess 34. In this press-fitted state, the latching piece 36 and nut holder main body 26 cooperatively sandwich the disk 8 of the pulley 6.

That is, when the position of the nut holder main body 26 (the other member) in the rotational direction is changed with respect to the disk 8 (one member) of the pulley 6 in the state in which the hook 13 is inserted into the hook through hole 14, the latching piece 36 of the hook 13 according to this embodiment comes in contact with the disk 8 of the pulley 6 from the side opposite from the nut holder main body 26. Since the latching piece 36 thus comes in contact with the disk 8 of the pulley 6, the hook 13 is latched by the disk 8 of the pulley 6.

When the hook 13 is latched as described above, the nut holder 25 is fixed together with the nut 24 to the disk 8 (a member on the side of the nut 24) of the pulley 6. That is, the nut holder 25 can easily be fixed to the disk 8 of the pulley 6 without using any tool.

To couple the pulley 6 and elastic member 21, the elastic member 21 is first overlapped on the disk 8 of the pulley 6 frontways. Then, the fixing screw 11 is inserted into the through hole 21d of the elastic member 21 and the screw through hole 12 of the pulley 6, and screwed into the nut 24. This work of screwing the fixing screw 11 into the nut 24 is performed while pressing the fixing screw 11 against the nut 24. That is, a pressing force formed by a pressing load is applied to the nut 24.

This pressing force is transmitted to the hook 13 via the nut holder 25, and acts on the hook 13 as a force which presses the hook 13 to the rear side (in a direction in which the nut holder 25 moves away from the disk 8 of the pulley 6) in the axial direction of the hook 13.

In this embodiment, the hook 13 inserted into the hook through hole 14 is latched by the disk 8 of the pulley 6 because the latching piece 36 slightly deforms in the axial direction, when changing the position of the nut holder main body 26 in the rotational direction with respect to the disk 8 of the pulley 6. Therefore, the rigidity can be increased. Unlike the locking piece disclosed in patent literature 1, the hook 13 need not largely elastically deform in a direction different from the axial direction, and can be formed to have a high rigidity.

Accordingly, it is possible to prevent the hook 13 from being largely deformed by the above-described pressing force, so the nut holder 25 can strongly be fixed to the pulley 6 against this pressing force.

In this embodiment, therefore, it is possible to provide a power transmission device which adopts an arrangement capable of easily attaching the nut holder 25, and at the same time prevents the removal of the nut holder 25 due to the pressing force of pressing the fixing screw 11 against the nut 24.

In this embodiment, the projection 41 projecting toward the disk 8 of the pulley 6 is formed in a portion of the latching piece 36, which faces the disk 8 of the pulley 6 from the side opposite from the nut holder main body 26. Also, the recess 34 in which the projection 41 is accommodated is formed in a portion of the disk 8 of the pulley 6, which faces the projection 41.

In this embodiment, the projection 41 is accommodated in the recess 34 when the hook 13 is latched by the disk 8 of the pulley 6. The projection 41 regulates the movement of the hook 13 with respect to the disk 8 of the pulley 6.

Accordingly, even when the nut holder main body 26 is rotated with respect to the disk 8 of the pulley 6 in a direction in which this latched state is canceled, the projection 41 regulates the movement, so the latched state is not canceled. Even when a vibration is given to the nut holder 25 while the power transmission device 1 is in transit, therefore, the nut holder 25 does not move with respect to the disk 8 of the pulley 6. This means that the positions of the nut 24 and the screw through hole 12 of the pulley 6 remain unchanged. Also, after the power transmission device 1 is attached to the compressor 2 (a device to be driven), the fixing screw 11 is screwed into the hexagon nut 24 fitted in the hexagonal recessed portion 31 of the nut holder 25, so the nut holder 25 does not singly freely move due to vibrations.

The hook 13 according to this embodiment further includes the post 35 projecting from the nut holder main body 26 in the axial direction. The latching piece 36 according to this embodiment is formed on the distal end portion of the post 35. That portion of the circumferential surface of the post 35, which comes in contact with the hole wall surface 14a of the hook through hole 14, is formed into a shape which coincides with the hole wall surface 14a when viewed in the axial direction.

In this embodiment, the post 35 is in tight contact with the hole wall surface 14a when latching the hook 13, so the angle at which the nut holder main body 26 is rotated with respect to the disk 8 of the pulley 6 can be increased as much as possible. Accordingly, the area of the portion where the latching piece 36 and the disk 8 of the pulley 6 overlap each other in the axial direction in the latched state can be increased as much as possible. The portion where the latching piece 36 and the disk 8 of the pulley 6 overlap each other is equivalent to a pressure-receiving portion which receives the pressing force when the fixing screw 11 is screwed into the nut 24. By adopting this embodiment, therefore, it is possible to provide a power transmission device capable of more strongly fixing the nut holder 25.

### (Second Embodiment)

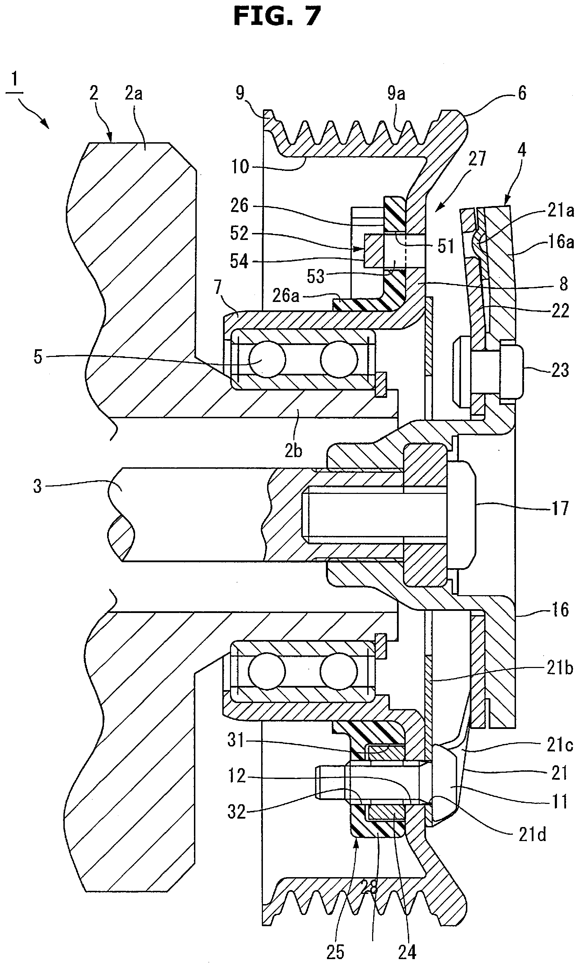

An embodiment of a power transmission device according to the second embodiment will be explained in detail with reference to Figs. 7 to 11. The same reference numerals as explained with reference to Figs. 1 to 6 described above denote the same or similar members in Figs. 7 to 11, and an explanation thereof will appropriately be omitted.

A latching structure 27 according to this embodiment includes a hook through hole 51 formed in a nut holder main body 26, and a hook 52 of a pulley 6, which is inserted into the through hole 51.

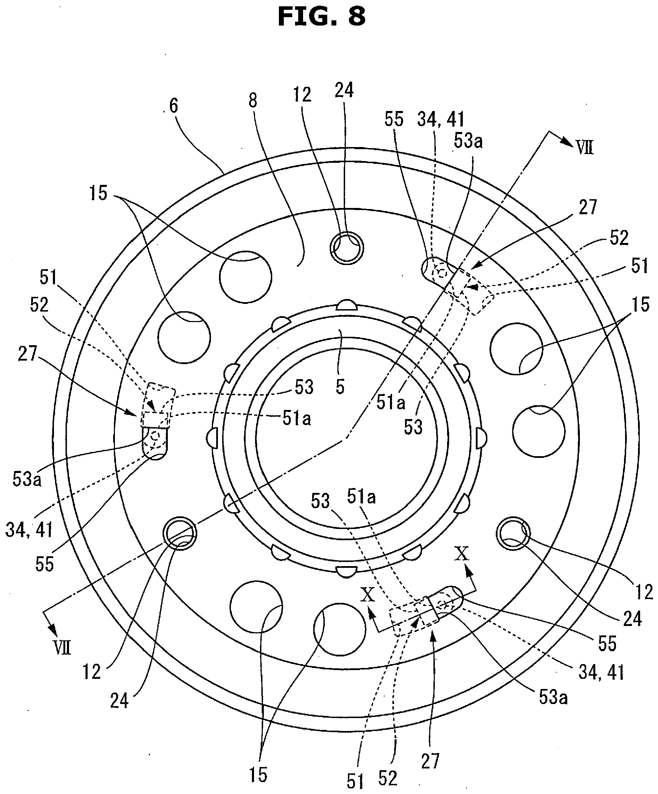

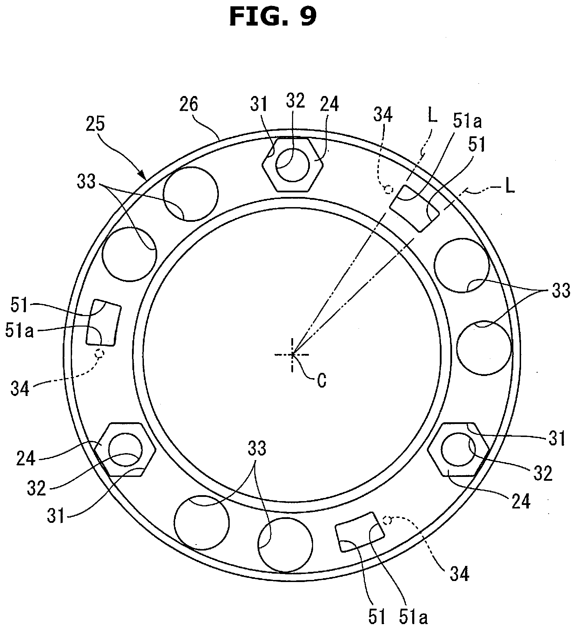

As shown in Figs. 8 and 9, the hook through hole 51 according to this embodiment is formed into a rectangular shape when viewed in the axial direction of the pulley 6. The hook through hole 51 is formed in each of positions which divide the nut holder main body 26 in three equal parts in the rotational direction of the pulley 6. An end face 51a of the hook through hole 51 in the rotational direction of the pulley 6 is formed parallel to a virtual line L extending in the radial direction from an axis C (see Fig. 9) of the annular nut holder main body 26 when viewed in the axial direction of the pulley 6.

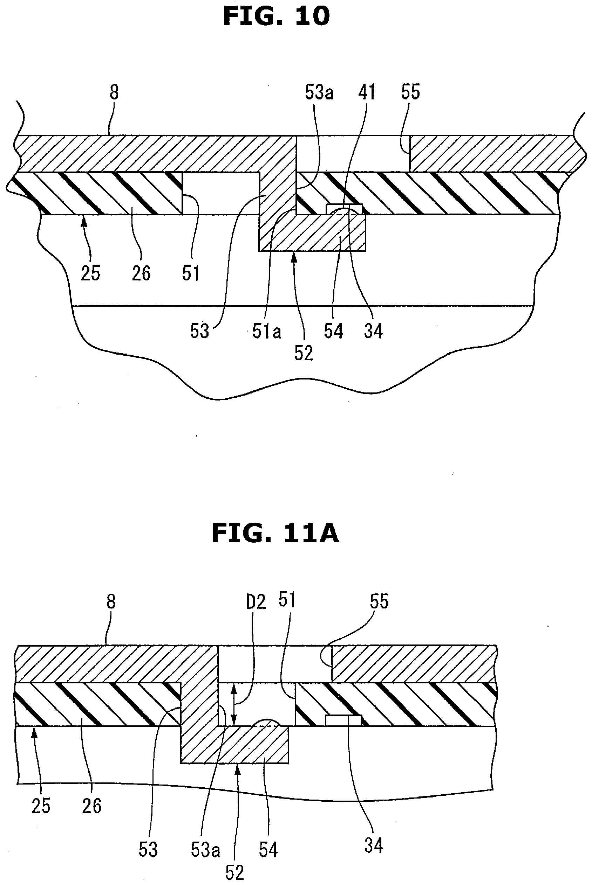

As shown in Fig. 10, a recess 34 is formed near the hook through hole 51 in the rear surface (a surface positioned on a side opposite to a disk 8 of the pulley 6) of a nut holder 25. As shown in Fig. 9, the recess 34 is formed in a position adjacent to the hook through hole 51 on one side in the rotational direction of the pulley 6.

As shown in Fig. 10, the hook 52 according to this embodiment includes a post 53 extending in the axial direction from the disk 8 of the pulley 6, and a latching piece 54 extending from the distal end portion of the post 53 to one side in the rotational direction of the pulley 6. The hook 52 is formed by a so-called cutting and raising process on the disk 8 of the pulley 6. Therefore, a hole 55 (see Figs. 8 and 10) is formed in the disk 8 of the pulley 6 by separating the latching piece 54 of the hook 52.

As shown in Fig. 8, the post 53 is formed into a rectangular shape when viewed in the axial direction of the pulley 6. A side surface 53a of the post 53, which points to one side in the rotational direction of the pulley 6, is formed parallel to a hole wall surface 51a (see Fig. 10) positioned on one side of the hook through hole 51 in the rotational direction. That is, that portion of the post 53, which is in contact with the hole wall surface 51a of the hook through hole 51, is formed into a shape which coincides with the hole wall surface 51a.

The latching piece 54 of the hook 52 is formed into a plate-like shape extending in the rotational direction of the pulley 6. As shown in Fig. 10, a projection 41 is formed on the distal end portion of the latching piece 54. The projection 41 is formed into a shape which is a part of a sphere, and formed in a predetermined position of the latching piece 54, which faces the nut holder main body 26. The predetermined position of the projection 41 is a position where the projection 41 is accommodated in the recess 34 of the nut holder 25 when the pulley 6 is rotated to one side in the rotational direction with respect to the nut holder 25 with the hook 52 being inserted into the hook through hole 51.

A gap D2 (see Fig. 11A) between the latching piece 54 and the disk 8 of the pulley 6 is formed to have a dimension which is smaller than the thickness of the nut holder main body 26, and by which the nut holder main body 26 can be press-fitted between the latching piece 54 and disk 8 as shown in Fig. 10. The procedure of this press fit will be explained below with reference to Figs. 11A to 11C.

To perform this press fit, as shown in Fig. 11A, the hook 52 is first inserted into the hook through hole 51, and the nut holder main body 26 is overlapped on the rear surface of the disk 8 of the pulley 6.
Then, the position of the nut holder 25 in the rotational direction with respect to the pulley 6 is changed. This rotating work is performed by, e.g., rotating the nut holder 25 in one direction with respect to the pulley 6 around the axis of the pulley 6. This rotational direction is a direction in which the latching piece 54 projects from the post 53.

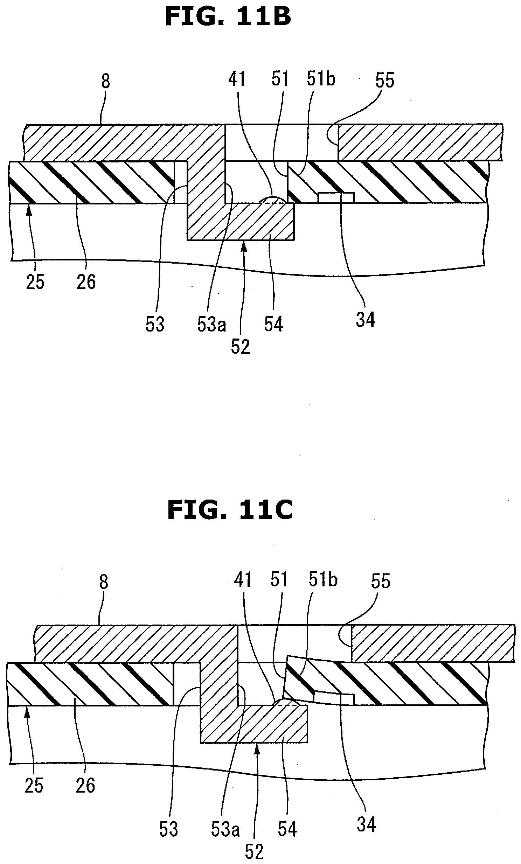

When the nut holder 25 is thus rotated with respect to the pulley 6, as shown in Fig. 11B, the projection 41 of the latching piece 54 is pressed against an opening edge 51b of the hook through hole 51. When the nut holder 25 is further rotated in this state, as shown in Fig. 11C, the opening edge 51b of the hook through hole 51 slightly warps by elastic deformation, and the projection 41 climbs over the opening edge 51b. When the nut holder 25 is further rotated with the nut holder main body 26 being elastically deformed as described above, as shown in Fig. 10, the opening edge 51b of the hook through hole 51 abuts against the side surface of the post 53.

In this state, as shown in Fig. 8, the post 53 fits in the hole wall surface 51a of the hook through hole 51. Also, the projection 41 of the latching piece 54 is accommodated in the recess 34 of the nut holder main body 26. The above-described press-fitting work is complete when the projection 41 is thus accommodated in the recess 34. In this press-fitted state, the latching piece 54 and disk 8 cooperatively sandwich the nut holder main body 26.

In this embodiment, when the position of the nut holder main body 26 in the rotational direction is changed with respect to the disk 8 of the pulley 6 in the state in which the hook 52 is inserted into the hook through hole 51, the latching piece 54 comes in contact with the nut holder main body 26 from the side opposite to the disk 8 of the pulley 6. Since the latching piece 54 thus comes in contact with the nut holder main body 26, the hook 52 is latched by the nut holder main body 26.

Accordingly, even when adopting this embodiment, the same effect as that obtained when adopting the above-described first embodiment is obtained.

In particular, since the hook 52 is formed on the pulley 6 made of a metal in this embodiment, the nut holder 25 can be fixed more strongly than when the hook 52 is formed on the nut holder 25 made of a synthetic resin.

### (Third Embodiment)

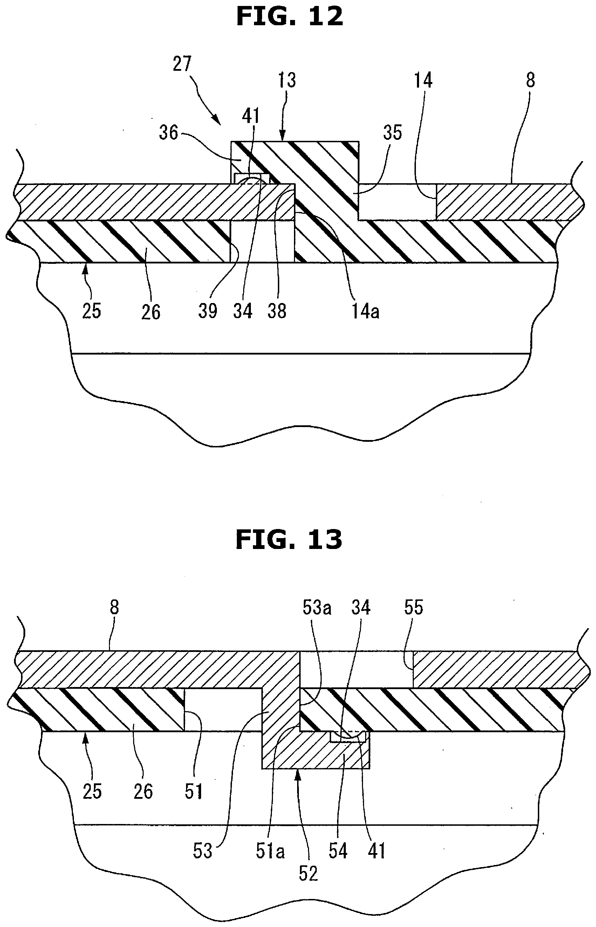

In both the above-described first and second embodiments, the projection is formed on the latching piece, and the recess is formed in the member facing the latching piece. However, the present invention is not limited to this. That is, an arrangement as shown in Fig. 12 can be formed when the latching piece is formed on the nut holder, and an arrangement as shown in Fig. 13 can be formed when the latching piece is formed on the pulley. The same reference numerals as explained with reference to Figs. 1 to 11 denote the same or similar members in Figs. 12 and 13, and a detailed explanation thereof will appropriately be omitted.

A projection 41 projecting toward a latching piece 36 is formed on a portion of a disk 8 of a pulley 6 shown in Fig. 12, which faces the latching piece 36.
A recess 34 in which the projection 41 is accommodated is formed in a portion of the latching piece 36, which faces the projection 41.

A projection 41 projecting toward a latching piece 54 is formed on a portion of a nut holder main body 26 shown in Fig. 13, which faces the latching piece 54. A recess 34 in which the projection 41 is accommodated is formed in a portion of the latching piece 54, which faces the projection 41.

Even when adopting the arrangements shown in Figs. 12 and 13, the same effects as those of the above-described embodiments are obtained.

### Explanation of the Reference Numerals and Signs

1...power transmission device, 6...pulley (rotary member), 11...fixing screw, 13, 52...hook, 14, 51...hook through hole, 14a, 51a...hole wall surface, 21...elastic member (power transmission member), 24...nut, 25...nut holder, 27...latching structure, 34...recess, 35, 53...post, 36, 54...latching piece, 41...projection

## Claims

1. A power transmission device comprising:
a rotatably supported rotary member;
a power transmission member overlapped on the rotary member from one side in an axial direction of a rotating shaft;
a fixing screw extending through the rotary member and the power transmission member in the axial direction;
a nut configured to sandwich the rotary member and the power transmission member in cooperation with the fixing screw;
an annular nut holder configured to hold the nut; and
a latching structure configured to attach the nut holder to a nut-side member among the rotary member and the power transmission member, which is closer to the nut than the other,
wherein the latching structure includes:
a plurality of through holes formed in one member among the nut-side member and the nut holder, the through holes extending through the one member in the axial direction; and
a plurality of hooks projecting from portions of the other member among the nut-side member and the nut holder, the portions corresponding to the through holes,
the through holes and the hooks are spaced apart from each other along a rotational direction of the rotary member, and
each of the hooks has a latching piece which comes in contact with the one member from a side opposite from the other member, when a position of the other member in the rotational direction with respect to the one member is changed while the hooks are inserted into the corresponding through holes.

2. The power transmission device according to claim 1, wherein
a projection projecting toward the one member is formed on a portion of the latching piece which faces the one member from the side opposite from the other member, and
a recess in which the projection is accommodated is formed in a portion of the one member which faces the projection.

3. The power transmission device according to claim 1, wherein
a projection projecting toward the latching piece is formed on a portion of the one member which faces the latching piece, and
a recess in which the projection is accommodated is formed in a portion of the latching piece which faces the projection.

4. The power transmission device according to claim 1, wherein
each of the hooks further includes a post which projects in the axial direction from the other member, and supports the latching piece, and
the latching piece is formed on a distal end portion of the post.

5. The power transmission device according to claim 4, wherein a portion of a circumferential surface of the post which comes in contact with a hole wall surface of the through hole, is formed into a shape which coincides with the hole wall surface.
